# EUROPÄISCHE PATENTSCHRIFT

(11) **EP 1 717 071 B1**
(45) Veröffentlichungstag und Bekanntmachung des Hinweises auf die Patenterteilung: **10.12.2008**
(21) Anmeldenummer: 06007625.4
(22) Anmeldetag: 11.04.2006
(51) Int. Cl.: B60H 1/00

(54) **Modular aufbegautes Fahrzeugtemperiersystem**
Modular vehicle air conditioning system
Système modulaire de climatisation de véhicule

(30) Priorität: 28.04.2005 DE 102005019828
(43) Veröffentlichungstag der Anmeldung: 02.11.2006
(73) Patentinhaber: J. Eberspächer GmbH & Co. KG, 73730 Esslingen (DE)
(72) Erfinder: Collmer, Andreas, 73773 Aichwald (DE); Schlecht, Patric, 73760 Ostfildern (DE); Haefner, Michael, 70469 Stuttgart (DE)
(74) Vertreter: Ruttensperger, Bernhard

(56) Entgegenhaltungen:
- DE-A1- 10 218 157
- DE-A1- 10 331 123
- FR-A- 2 798 095

## Beschreibung

Die vorliegende Erfindung betrifft ein Fahrzeugtemperiersystem, das dazu eingesetzt werden kann, die in einen Fahrzeuginnenraum einzuleitende Luft thermisch oder/und klimatisch zu behandeln. Dies bedeutet also, dass die Luft durch Aufnahme von Wärme erwärmt werden kann, um in entsprechender Weise den Fahrzeuginnenraum zu heizen, oder beispielsweise auch gekühlt werden kann, um vor allem im Sommer eine Kühlung des Fahrzeuginnenraums zu erlangen. Auch das Entziehen von Feuchtigkeit aus der in den Fahrzeuginnenraum einzuleitenden Luft ist ein derartiger Behandlungsaspekt, um beispielsweise bei hoher Luftfeuchtigkeit das Beschlagen der Scheiben an der Innenseite zu vermeiden.

Aus der DE 103 31 123 A1 ist ein Fahrzeugtemperiersystem bekannt, bei dem in einem Gehäuse mehrere der Behandlung von Luft dienende Systembereiche vorhanden sind. Diese umfassen beispielsweise ein brennstoffbetriebenes Heizgerät sowie ein elektrisch betriebenes Heizgerät und einen Verdampfer einer Klimatisiereinrichtung. Selbstverständlich ist auch ein Luftfördergebläse vorhanden, um die zu behandelnde Luft durch dieses Gehäuse hindurch an den verschiedenen Systembereichen vorbei zu fördern. Je nachdem, welche Kombination von zur thermischen bzw. klimatischen Behandlung dienenden Systembereichen vorgesehen sein soll, ist das Gehäuse in seinem Innenvolumenbereich verschiedenartig ausgestaltet, um diese Systembereiche aufnehmen zu können. Dies bedeutet, dass für verschiedene Fahrzeugtypen, die mit verschiedenen Kombinationen an zur thermischen bzw. klimatischen Behandlung dienenden Systembereichen ausgestattet werden sollen, auch grundsätzlich verschieden aufgebaute Systeme bereitgestellt werden müssen.

Die WO 03/097390 A1 offenbart ein Fahrzeugtemperiersystem für die Fahrerkabine eines Lastkraftwagens. In einem Klimakasten sind verschiedene der Klimatisierung bzw. thermischen Behandlung dienende Systembereiche, wie z.B. ein Verdampfer und ein Wärmetauscher vorhanden, ebenso wie ein Luftfördergebläse. Um auch bei vergleichsweise niedrigen Umgebungstemperaturen eine Erwärmung vorsehen zu können, wenn der Wärme liefernde Brennkraftmotor nicht in Betrieb ist, ist mit dem Klimakasten über eine Leitungsverbindung eine Zusatzheizung verbunden. Bei Aktivierung derselben wird von dieser erwärmte Luft in den Klimakasten geleitet und über diesen dann in Richtung Innenraum der Fahrerkabine weitergeführt.

Die DE 102 18 901 A1 offenbart ein mobiles Heizgerät, also ein in einem Fahrzeug einzusetzendes Heizgerät. Dieses Heizgerät ist so an die Klimabox angeschlossen, dass durch das in dieser Klimabox vorgesehene Luftfördergebläse gleichzeitig auch die in dem Heizgerät zu erwärmende Luft gefördert wird. Auf diese Art und Weise kann das Bereitstellen eines zusätzlichen Luftfördergebläses in dem Heizgerät selbst vermieden werden. In der Klimabox sind neben dem Luftfördergebläse auch noch der Verdampfer einer Klimatisiereinrichtung und ein Wärmetauscher angeordnet.

Die gattungsgemäße FR 2 798 095 offenbart ein modular aufgebautes Fahrzeugtemperiersystem, umfassend ein Haupt-Luftbehandlungsmodul zur thermischen oder/und klimatischen Behandlung von in einen Fahrzeuginnenraum einzuleitender Luft mit einem Hauptmodulgehäuse, wobei an dem Hauptmodulgehäuse ein Verbindungsbereich mit einer Verbindungsöffnung vorgesehen ist, wobei wahlweise die Verbindungsöffnung in dem Verbindungsbereich des Hauptmodulgehäuses durch ein Verschlusselement abschließbar ist zur Erlangung einer eigenständigen Funktionalität des Haupt-Luftbehandlungsmoduls, oder der Verbindungsbereich des Hauptmodulgehäuses mit einem Gegen-Verbindungsbereich an einem Zusatzmodulgehäuse eines Zusatz-Luftbehandlungsmoduls verbindbar ist zur Erlangung einer kombinierbaren Funktionalität des Haupt-Luftbehandlungsmoduls und des Zusatz-Luftbehandlungsmoduls, nach dem Oberbegriff des unabhängigen Anspruchs 1.

Das gattungsgemäße Fahrzeugtemperiersystem ist modular aufgebaut und zwar mit einem Haupt-Luftbehandlungsmodul, das grundsätzlich für sich alleine funktionsfähig ist, also eine gewisse Grund-Funktionalität zur Behandlung von in den Fahrzeuginnenraum einzuleitender Luft bereitstellen kann. Je nach Einsatzumgebung und möglicherweise aber noch gewünschter zusätzlicher Funktionalität kann dieses Haupt-Luftbehandlungsmodul aber auch mit einem Zusatz-Luftbehandlungsmodul gekoppelt werden, welches dann diejenigen Systembereiche enthält, die für das Bereitstellen einer zusätzlichen Funktionalität erforderlich sind. Entweder das Haupt-Luftbehandlungsmodul alleine oder das mit einem Zusatz-Luftbehandlungsmodul verbundene Haupt-Luftbehandlungsmodul wird dann als eine Einheit in ein Fahrzeug eingegliedert. Auf diese Art und Weise wird eine hohe Variabilität im Einsatzzweck gewährleistet, wobei auch von Bedeutung ist, dass durch das Bereitstellen einer standardisierten "Schnittstelle" durch den Verbindungsbereich am Hauptmodulgehäuse auch zukünftigen Entwicklungen dadurch Rechnung getragen werden kann, dass an zukünftige Anforderungen angepasste oder darauf abgestimmte Zusatz-Luftbehandlungsmodule mit einem bereits konzipierten Haupt-Luftbehandlungsmodul zusammengefügt werden können.

In der gattungsgemäße FR 2798095 ist in dem Hauptmodulgehäuse ein Wärmetauscher zur Übertragung von in einem Motorkühlmittel transportierter Wärme auf die in einen Fahrzeuginnenraum einzuleitende Luft vorgesehen. Dies bedeutet also, dass bei derartiger Ausgestaltung das Haupt-Luftbehandlungsmodul eine Minimalfunktionalität zur thermischen Behandlung der einzuleitenden Luft, nämlich zur Erwärmung derselben, aufweist.

Bei dem gattungsgemäßen Fahrzeugtemperiersystem ist vorgesehen, dass ein Zusatz-Luftbehandlungsmodul eine elektrisch betriebene Heizeinrichtung, sowie

eine Strömungsführungseinstelleinrichtung umfasst, durch welche die Durchströmbarkeit des Zusatz-Luftbehandlungsmoduls zur thermischen oder/und klimatischen Behandlung der in den Fahrzeuginnenraum einzuleitenden Luft variierbar ist. Auf diese Art und Weise ist auch die Funktionalität des betriebsmäßigen Abkoppelns des Zusatz-Luftbehandlungsmoduls in dieses selbst integriert, so dass diesbezüglich keine Änderungen am Haupt-Luftbehandlungsmodul erforderlich sind.

Dabei kann beispielsweise das Zusatz-Luftbehandlungsmodul durch die Strömungsführungseinstelleinrichtung gegen Durchströmung abgesperrt werden.

Es ist die Aufgabe der Erfindung, ein Fahrzeugtemperiersystem bereitzustellen, das in einfacher Art und Weise an verschiedene Systemumgebungen und Betriebsanforderungen anpassbar ist.

Erfindungsgemäß wird diese Aufgabe gelöst durch ein modular aufgebautes Fahrzeugtemperiersystem, wobei das Luftfördergebläse und die Frischluft/Umluft-Einselleinrichtung in dem Hauptmodulgehäuse vorgesehen sind, wobei die Heizeinrichtung brennstoffbetrieben wird, und wobei der Wärmetauscher in dem Hauptmodulgehäuse stromabwärts des Verbindungsbereichs angeordnet ist.

Da das Bereitstellen einer Klimatisiereinrichtung in Fahrzeugen sich mehr und mehr zum Standard entwickelt, kann weiterhin vorgesehen sein, dass in dem Hauptmodulgehäuse eine Verdampfer/Wärmetauscher-Einheit einer Klimatisiereinrichtung vorgesehen ist.

Es kann zusätzlich vorgesehen sein, dass ein Zusatz-Luftbehandlungsmodul ferner eine elektrisch betriebene Heizeinrichtung umfasst.

Seinen auf Grund des Modulgedankens besonders vorteilhaften Aspekt kann das erfindungsgemäße System vor allem dann zum Tragen bringen, wenn das mit dem Haupt-Luftbehandlungsmodul zu verbindende Zusatz-Luftbehandlungsmodul aus einer Mehrzahl verschiedener Zusatz-Luftbehandlungsmodule auswählbar ist. Die verschiedenen Zusatz-Luftbehandlungsmodule, die beispielsweise auch von verschiedenen Zulieferern bereitgestellt werden können und selbstverständlich sich in der Art der bereitgestellten Zusatzfunktionalität, in die Dimensionierung und auch im Kostenfaktor unterscheiden können, führen zu einem Variationsspektrum, so dass beispielsweise mit dem erfindungsgemäßen Luftbehandlungssystem sowohl Klein- oder Mittelklassefahrzeuge als auch Oberklassefahrzeuge bzw. Nutzfahrzeuge ausgestattet werden können.

Die vorliegende Erfindung wird nachfolgend mit Bezug auf die beiliegenden Figuren detailliert beschrieben. Es zeigt:
- Fig. 1: ein erfindungsgemäßes modular aufgebautes Luftbehandlungssystem in einem Einsatzzustand nur mit einem Haupt-Luftbehandlungsmodul;
- Fig. 2: ein erfindungsgemäßes modulares System mit einem Haupt-Luftbehandlungsmodul und einem Zusatz-Luftbehandlungsmodul;
- Fig. 3: ein weiteres erfindungsgemäßes System mit einem Haupt-Luftbehandlungsmodul und einem anderen Zusatz-Luftbehandlungsmodul;
- Fig. 4: ein weiteres erfindungsgemäßes System mit einem Haupt-Luftbehandlungsmodul und einem anderen Zusatz-Luftbehandlungsmodul.

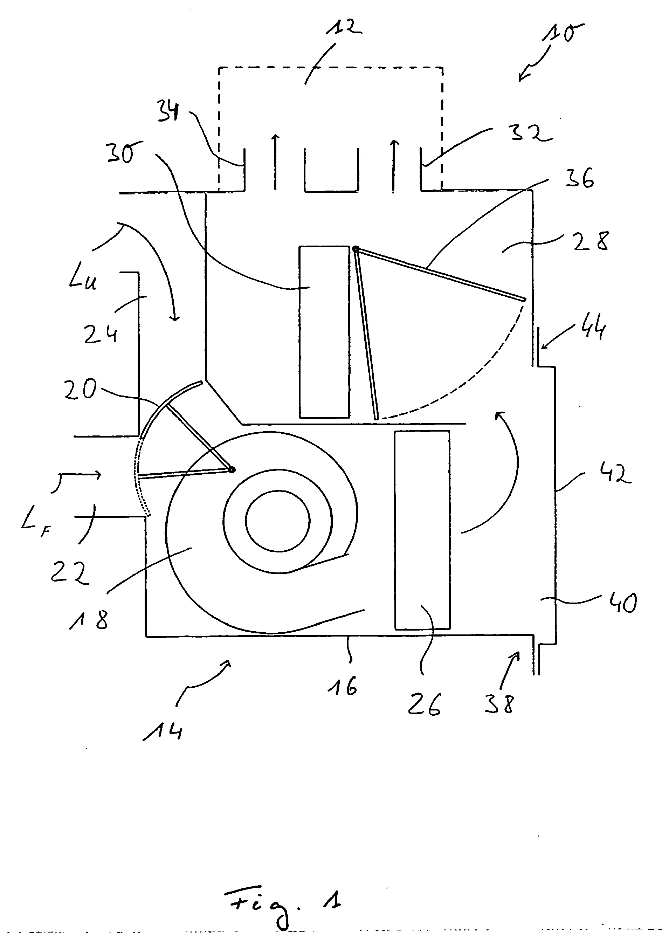

In Fig. 1 ist ein erfindungsgemäßes Fahrzeugtemperiersystem mit 10 bezeichnet. Das Fahrzeugtemperiersystem 10 dient dazu, die in einen nur schematisch angedeuteten Fahrzeuginnenraum 12 einzuleitende Luft zu konditionieren. Konditionieren bedeutet dabei, dass diese Luft einerseits auf eine gewünschte Temperatur gebracht werden kann, also beispielsweise erwärmt oder gekühlt werden kann oder dass dieser Luft Feuchtigkeit entzogen wird, um das Beschlagen der Fensterscheiben des Fahrzeugs zu vermeiden. Auch das Mischverhältnis Frischluft/Umluft kann einen Aspekt der Konditionierung bilden.

Das Fahrzeugtemperiersystem 10 weist ein Haupt-Luftbehandlungsmodul 14 mit einem Hauptmodulgehäuse 16 auf. Durch dieses Haupt-Luftbehandlungsmodul 14 wird eine gewisse Grundfunktionalität zur Konditionierung der in den Innenraum 12 einzuleitenden Luft bereitgestellt. Hierzu enthält das Haupt-Luftbehandlungsmodul 14 verschiedene Systembereiche. Einer dieser Systembereiche ist ein Luftfördergebläse 18, durch welches Luft in das Hauptmodulgehäuse 16 gesaugt wird und druckseitig in Richtung zum Innenraum 12 gefördert wird. Im dargestellten Ausgestaltungsbeispiel ist stromaufwärts des Luftfördergebläses 18 eine Frischluft/Umluft-Einstelleinrichtung 20 vorgesehen, die durch entsprechende Verstellung eine Variation des Verhältnisses der zu fördernden Frischluft L_{F} und Umluft L_{U} ermöglicht. Hierzu kann durch entsprechende Verstellung der Einrichtung 20 der zur Außenumgebung hin führende Frischluftkanal 22 in gewünschtem Ausmaß freigegeben bzw. blockiert werden, ebenso wie der Umluft L_{U} aus dem Fahrzeuginnenraum 12 heranführende Umluftkanal 24. In den in Fig. 1 dargestellten Extrempositionierungen ist es möglich, den Frischluftkanal 22 oder den Umluftkanal 24 vollständig abzusperren.

Stromabwärts des Luftfördergebläses 18 ist eine Verdampfer/Wärmetauscher-Einrichtung 26 einer nicht weiter dargestellten Klimatisiereinrichtung vorgesehen. Durch Betreiben der Klimatisiereinrichtung kann bei der in der Einrichtung 26 stattfindenden Verdampfung der diese umströmenden Luft Wärme und auch Feuchtigkeit entzogen werden. Die in Richtung Fahrzeuginnenraum geförderte Luft 12 strömt nach Durch- bzw. Umströmung der Einrichtung 26 in Richtung zu einem weiter stromabwärtigen Raumbereich 28. In diesem Raumbereich 28 ist ein Wärmetauscher 30 vorgesehen. Dieser Wärmetauscher 30 ist von dem in einem Motorkühlkreislauf zirkulierenden Kühlmittel durchströmbar, so dass dann, wenn dieser Wärmetauscher 30 von der in den Fahrzeuginnenraum 12 einzuleitenden Luft umströmt wird, auf diese Luft Wärme übertragen wird. Bei gleichzeitig aktiver Klimatisiereinrichtung und aktivem Wärmetauscher 30 kann die durch das Luftfördergebläse 18 geförderte Luft zunächst gekühlt und dabei auch getrocknet werden, während sie dann im Wärmetauscher 30 wieder auf die gewünschte Temperatur erwärmt und so erwärmt und getrocknet in den Fahrzeuginnenraum 12 eingeleitet werden kann. Hierzu sind beispielsweise mehrere Einleitbereiche 32, 34 vorgesehen, die an verschiedenen Positionen verteilt sein können, um den Fahrzeuginnenraum 12 gezielt und möglichst gleichmäßig, sofern dies gewünscht ist, zu erwärmen. Selbstverständlich können den Einleiteinrichtungen 32, 34 Organe zugeordnet sein, welche diese wahlweise manuell oder automatisiert abschließen bzw. freigeben.

Um den Wärmetauscher 30 aktivieren bzw. deaktivieren zu können, ist in dem Raumbereich 28 eine Stellklappe 36 vorgesehen. Je nach Stellung dieser Stellklappe kann die von der Verdampfer/Wärmetauscher-Einrichtung 26 in den Raumbereich 28 strömende Luft entweder vollständig oder teilweise in Richtung zum Wärmetauscher 30 geleitet werden, oder zumindest teilweise so geleitet werden, dass sie unmittelbar und ohne Umströmung des Wärmetauschers 30 zu den Einleitbereichen 32, 34 gelangt.

Es ist selbstverständlich, dass die verschiedenen vorangehend beschriebenen Systembereiche, die zur Veränderung des Behandlungszustandes verstellt werden müssen oder eingeschaltet oder ausgeschaltet werden müssen, mit entsprechenden Antrieben oder Aktuatoren versehen sein können bzw. unter der Ansteuerung einer Ansteuereinrichtung stehen, um den gewünschten Betrieb zu erlangen.

Man erkennt in Fig. 1 weiter, dass an dem Hauptmodulgehäuse 16 ein hier allgemein mit 38 bezeichneter Verbindungsbereich vorgesehen ist. In diesem Verbindungsbereich 38 ist in dem Hauptmodulgehäuse 16 eine Öffnung 40 gebildet. Diese Öffnung 40, in welcher grundsätzlich das Hauptmodulgehäuse 16 offen ist, ist bei der in Fig. 1 dargestellten Konfiguration des erfindungsgemäßen modular aufgebauten Fahrzeugtemperiersystems durch ein deckelartiges Verschlusselement 42 verschlossen. Dieses weist einen Gegen-Verbindungsbereich 44 auf, der so geformt ist, dass er in Zusammenwirkung mit dem Verbindungsbereich 38 am Hauptmodulgehäuse 16 einen stabilen und dichten Abschluss des Hauptmodulgehäuses 16 bereitstellt. Beispielsweise können hier jeweilige Randbereiche am Verbindungsbereich 38 einerseits und am Gegen-Verbindungsbereich 44 andererseits derart aufeinander abgestimmt geformt sein, dass beim Gegeneinanderlegen, möglicherweise unter Zwischenschaltung einer Dichtung, der gewünschte Abschluss erlangt wird. Auch das Bereitstellen einer labyrinthartigen Dichtungsanordnung ist hier möglich. Die feste Verbindung des Verschlusselements 42 mit dem Hauptmodulgehäuse 16 kann beispielsweise durch den Einsatz von Schrauben erlangt werden.

Weiterführend kann auch daran gedacht werden, die standardisierte Verbindungsstelle nicht nur mechanisch für das Anbringen des Zusatzmoduls zu nutzen, sondern auch die elektrische Kontaktierung, z.B. für das Ansteuern eines Stellmotors, PTC Sensorik, oder Steuergerät, über die Schnittstelle vorzunehmen. Dies hätte den Vorteil, dass die Verkabelung im Fahrzeug vereinfacht werden würde.

Das in Fig. 1 dargestellte Fahrzeugtemperiersystem 10 umfasst also das Haupt-Luftbehandlungsmodul 14, dessen Gehäuse 16 in dieser Konfiguration im Bereich des Verbindungsbereichs 38 dicht abgeschlossen ist. Es ist somit nach Integration dieses Systems die durch das Haupt-Luftbehandlungsmodul 14 bzw. die verschiedenen Systembereiche desselben vorgesehene Grund-Funktionalität gewährleistet, welche beispielsweise das Erwärmen, Kühlen und Trocknen von Luft umfassen kann.

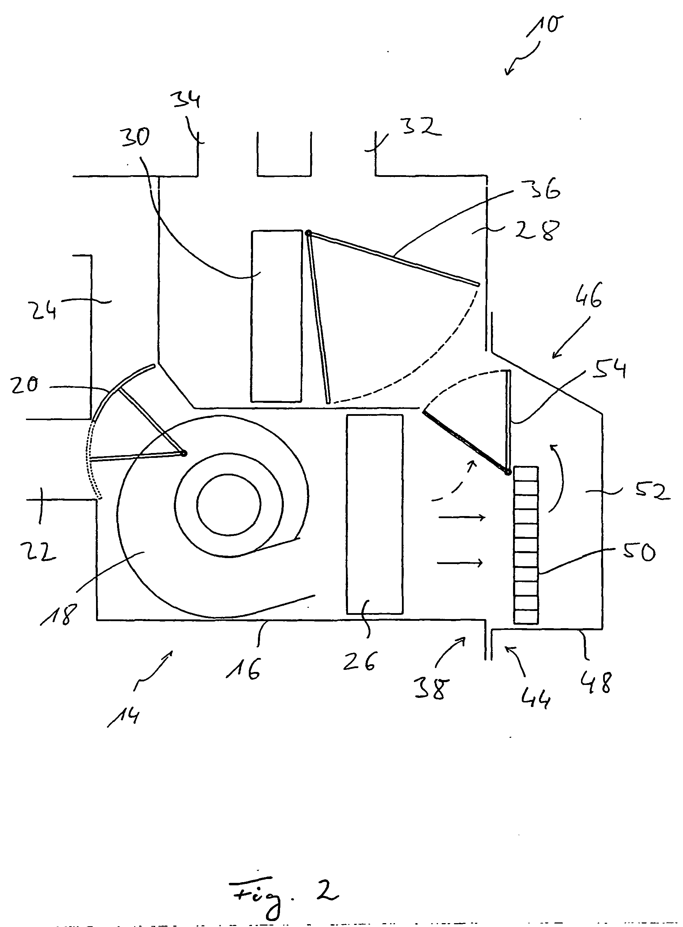

In Fig. 2 ist das erfindungsgemäße modulare Fahrzeugtemperiersystem 10 in einer anderen Konfiguration dargestellt. Man erkennt wieder das Haupt-Luftbehandlungsmodul 14 mit seinem Hauptmodulgehäuse 16 und den verschiedenen vorangehend beschriebenen darin angeordneten Systembereichen, die zur Konditionierung der in den Fahrzeuginnenraum einzuleitenden Luft aktvierbar bzw. deaktivierbar und verstellbar sind. Bei der in Fig. 2 gezeigten Konfiguration ist jedoch an das Haupt-Luftbehandlungsmodul 14 ein Zusatz-Luftbehandlungsmodul 46 angesetzt. Dieses Zusatz-Luftbehandlungsmodul 46 umfasst ein Zusatzmodulgehäuse 48 mit einem Gegen-Verbindungsbereich 44, der hinsichtlich seiner Formgebung grundsätzlich dem auch bei dem Verschlusselement 42 vorhandenen Gegen-Verbindungsbereich 44 entsprechen kann und somit ebenso mit dem Verbindungsbereich 38 am Hauptmodulgehäuse 16 fest und dicht verbunden werden kann. Hier ist also durch die Gestaltung des Verbindungsbereichs 38 ein Standard vorgegeben, an den verschiedene an das Hauptmodulgehäuse 16 anzukoppelnde Systeme, wie also beispielsweise das Verschlusselement 42 oder ein Zusatz-Luftbehandlungsmodul 46, mit dem jeweiligen Gegen-Verbindungsbereich 44 adaptiert sind.

Bei der Konfiguration eines Fahrzeugtemperiersystems 10 kann also ausgewählt werden, ob das Haupt-Luftbehandlungsmodul 16 alleine mit seiner Funktionalität in ein Fahrzeug integriert werden sollen, also beispielsweise das in Fig. 1 gezeigte System zum Einsatz gelangen soll, oder ob zusätzliche und in einem Zusatz-Luftbehandlungsmodul vorhandene Funktionalitäten erforderlich oder gewünscht sind. So weist beispielsweise das in Fig. 2 gezeigte Zusatz-Luftbehandlungsmodul 46 eine beispielsweise eine PTC-Anordnung umfassende elektrisch betreibbare Heizeinrichtung 50 auf. Diese Heizeinrichtung 50 ist im Wesentlichen in dem durch das Zusatzmodulgehäuse 48 umgrenzten Raumbereich 52 angeordnet. Die vom Luftfördergebläse 18 geförderte Luft strömt, nachdem sie die Verdampfer/Wärmetauscher-Einrichtung 26 umströmt hat, in Richtung auf die Heizeinrichtung 50 zu, umströmt diese und tritt dabei in den Raumbereich 52 im Zusatzmodulgehäuse 48 ein. Dabei dient das Zusatzmodulgehäuse 48 gleichzeitig auch als Strömungsführungselement und lenkt die die Heizeinrichtung 50 umströmende Luft wieder in Richtung zum Hauptmodulgehäuse 16 um. In dem so gebildeten Strömungsweg ist eine Einstellklappe 54 angeordnet. Diese kann zwischen den beiden in Fig. 2 gezeigten Extremstellungen verstellt werden. In der schwarz eingezeichneten Extremstellung ist dafür gesorgt, dass die gesamte vom Luftfördergebläse 18 herangeförderte Luft die Heizeinrichtung 50 umströmt und nach Durchströmung des Raumbereichs 52 im Zusatzmodulgehäuse 48 in den Raumbereich 28 des Hauptmodulgehäuses 16 gelangt. In der weiß eingezeichneten Stellung schließt die Klappe 54 den Raumbereich 52 im Zusatzmodulgehäuse 48 gegen Durchströmung ab, so dass zwar die vom Luftfördergebläse 18 herangeförderte Luft in Richtung auf die elektrisch erregbare Heizeinrichtung 50 zu strömt, auf Grund des durch die Klappe 54 generierten Abschlusses jedoch ein Stau entsteht, der, wie durch den strichlierten Pfeil angedeutet, die Luft in Richtung zum Raumbereich 28 ablenkt. Je nachdem, ob also die Luft in den Raumbereich 52 eintreten bzw. diesen Durchströmen kann, kann die Heizeinrichtung 50 umströmt werden, um bei Erregung derselben die in den Fahrzeuginnenraum 12 einzuleitende Luft zu erwärmen, oder es kann die Luft so geführt werden, dass sie im Prinzip überhaupt nicht in den Raumbereich 52 eintritt, so dass bei nicht gewünschtem Betrieb der Heizeinrichtung 50, also in einem Zustand, in welchem diese auch nicht elektrisch erregt wird, keine die Luftströmung an sich drosselnden Effekte entstehen und diese grundsätzlich so strömen kann, wie dies auch bei der in Fig. 1 gezeigten Konfiguration der Fall ist. Selbstverständlich ist es auch möglich, die Klappe 54 in einer Stellung zwischen den beiden dargestellten Extremstellungen zu positionieren, so dass ein Teil der vom Luftfördergebläse 18 geförderten Luft nicht in den Raumbereich 52 eintritt, sondern nach Umströmen der Verdampfer/Wärmetauscher-Einrichtung direkt in den Raumbereich 28 eintritt.

Man erkennt aus der vorangehenden Beschreibung, dass das Zusatz-Luftbehandlungsmodul 46 all diejenigen Komponenten bzw. Systembereiche enthält, die dazu erforderlich sind, die durch dieses Zusatz-Luftbehandlungsmodul 46 bereitgestellte Funktionalität zu nutzen oder zu deaktivieren, z.B. auch die erforderliche Sensorik/Steuergeräte. Es sind keine konstruktiven Maßnahmen am Haupt-Luftbehandlungsmodul 14 erforderlich. Es muss zum Hinzufügen dieser zusätzlichen Funktionalität lediglich das Zusatz-Luftbehandlungsmodul 46 mit seinem Gegen-Verbindungsbereich 44 am Verbindungsbereich 38 des Haupt-Luftbehandlungsmoduls 14 festgelegt werden. Dabei ist es selbstverständlich, dass auch die zum Aktivieren bzw. Deaktivieren dieser Zusatzfunktionalität erforderlichen Aktuatoren, wie z.B. ein Antriebsmotor für die Klappe 54, am Zusatz-Luftbehandlungsmodul 46 vorgesehen sein können. Da hier grundsätzlich auch eine Ansteuerung erfordernde Systembereiche vorhanden sind, ist es selbstverständlich möglich, je nach Konfiguration des Temperiersystems 10 dann ggf. auch verschiedene Steuergeräte zu wählen, die je nach hinzuzufügender Funktionalität auch entsprechende Ansteuerbereiche bereitstellen. Grundsätzlich ist es selbstverständlich aber auch möglich, ein der Ansteuerung des Systems 10 dienendes Steuersystem modular aufzubauen, und je nach hinzuzufügender Zusatzfunktionalität auch entsprechende Ansteuermodule hinzuzufügen. Dies kann sowohl im Bereich der Hardware als auch im Bereich der Software erfolgen.

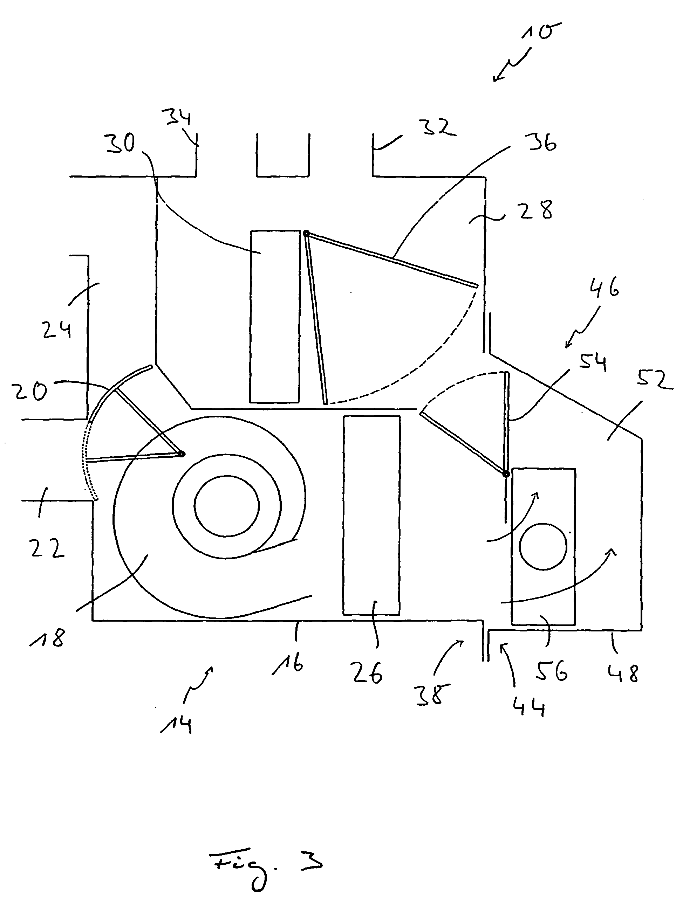

In Fig. 3 ist eine weitere alternative Konfiguration eines erfindungsgemäßen Fahrzeugtemperiersystems 10 mit modularem Aufbau gezeigt. Während das Haupt-Luftbehandlungsmodul 14 so aufgebaut ist, wie vorangehend beschrieben, unterscheidet sich das Zusatz-Luftbehandlungsmodul 46 dadurch, dass hier eine brennstoffbetriebene Heizeinrichtung 56 vorgesehen ist. Diese kann, sofern eine zusätzliche Funktion als Standheizung oder Zuheizer gewünscht ist, in Betrieb gesetzt werden, um die in den Raumbereich 52 im Zusatzmodulgehäuse 48 strömende Luft zu erwärmen und sie erwärmt in den Raumbereich 28 und von diesen in den Fahrzeuginnenraum 12 strömen zu lassen. Hier ist grundsätzlich die gleiche Funktionalität gegeben, wie bei der Konfiguration der Fig. 2, wobei jedoch die Wärmeenergie nicht durch Umwandlung elektrischer Energie bereitgestellt wird, sondern durch Verbrennung. Von Bedeutung ist jedoch, dass auch hier das Zusatzmodulgehäuse 48 mit dem "standardisierten" Gegen-Verbindungsbereich 44 ausgestattet ist, so dass dieses Zusatz-Luftbehandlungsmodul 46 mit dem gleichen Haupt-Luftbehandlungsmodul 14 kombiniert werden kann, wie es vorangehend bereits beschrieben worden ist.

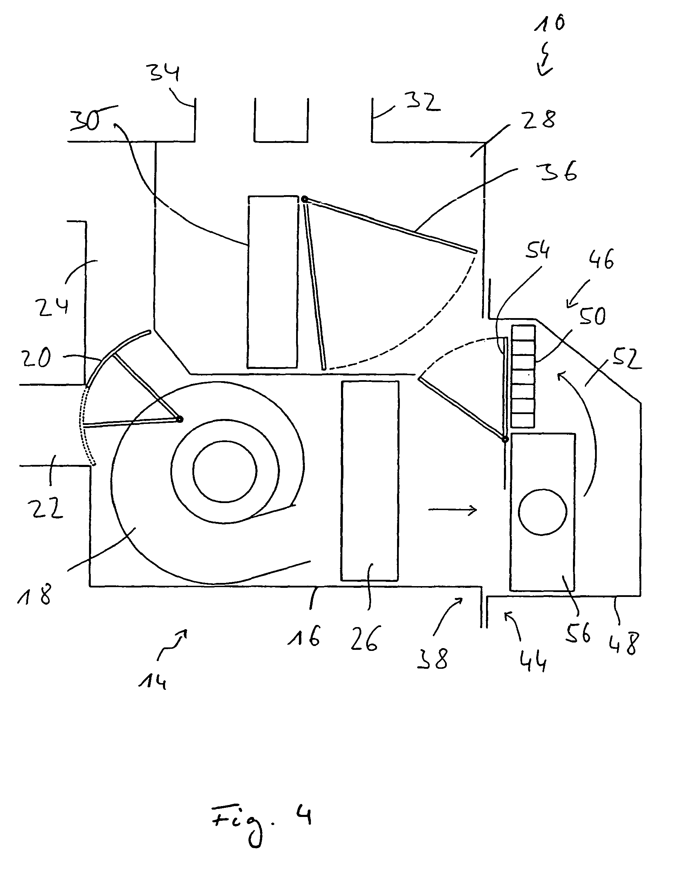

Bei der in Fig. 4 gezeigten Konfiguration ist in dem Zusatz-Luftbehandlungsmodul 46 ebenfalls eine Zusatzfunktionalität zum Erwärmen der in den Fahrzeuginnenraum einzuleitenden Luft bereitgehalten, wobei hierfür sowohl eine elektrisch erregbare Heizeinrichtung 50 als auch eine brennstoffbetriebene Heizeinrichtung 56 vorhanden ist. Die aus dem Hauptmodulgehäuse 16 heranströmende Luft trifft zunächst auf die brennstoffbetriebene Heizeinrichtung 56, durchströmt oder umströmt einen Wärmetauscherbereich derselben und gelangt dann nach weiterer Durchströmung des Raumbereichs 52 im Zusatzmodulgehäuse 48 zur elektrisch erregbaren Heizeinrichtung 50. Hier kann also je nach erforderlicher Heizleistung die geeignete der beiden Heizeinrichtungen 50 oder 56 ausgewählt werden, oder es können beide gleichzeitig betrieben werden, z.B. für schnelles Defrosten der Scheiben. Durch entsprechende Einstellung der Klappe 54 kann wieder dafür gesorgt werden, dass der Raumbereich 52 durch Abschließen des Ausströmbereichs desselben gegen Durchströmung blockiert ist und somit die in den Fahrzeuginnenraum einzuleitende Luft praktisch überhaupt nicht in den Raumbereich 52 gelangt.

Die vorliegende Erfindung stellt also ein modular aufgebautes Fahrzeugtemperiersystem bereit, bei welchem eine Grundeinheit, nämlich das Haupt-Luftbehandlungsmodul 14 mit einer Grund-Funktionalität bereitgestellt wird, die bereits ausreicht, um ein Fahrzeug in sinnvoller Art und Weise betreiben zu können. In diesem Falle ist es nicht erforderlich, Zusatz-Luftbehandlungsmodule bereitzustellen, sondern durch Abschließen der im Hauptmodulgehäuse 16 vorgesehenen Öffnung 40 vermittels des Verschlusselements 42 wird ein eigenständig funktionsfähiges Haupt-Luftbehandlungsmodul 14 erhalten. Sollen weitere Funktionalitäten hinzugefügt werden, beispielsweise, weil das System in ein Fahrzeug gehobenerer Klasse integriert werden soll, oder für bestimmte Kaltländer, können je nach gewünschter zusätzlicher Funktionalität dann entsprechend aufgebaute Zusatz-Luftbehandlungsmodule 46 mit ihrem Zusatzmodulgehäuse 48 an das Hauptmodulgehäuse 16 angesetzt werden. Es ist selbstverständlich und in den Figuren auch erkennbar, dass bei dieser Kombination mehrerer Modulbereiche diese nicht nur funktionell zusammenwirken, sondern auch körperlich ineinander eingreifen, wie dies beispielsweise bei der Klappe 54 der Fall ist. In der Stellung, in welcher diese Klappe 54 dafür sorgt, dass die gesamte durch das Luftfördergebläse 18 geförderte Luft auch durch das Zusatz-Luftbehandlungsmodul 46 strömt, kann diese Klappe 54 mit einer Wandung oder einem Sitz am Haupt-Luftbehandlungsmodul 14 zusammenwirken, um eine entsprechende Luftströmung zu erzwingen.

Von Bedeutung ist, dass durch Bereitstellung einer standardisierten Schnittstelle am Hauptmodulgehäuse 16 verschiedene mit einem Gegen-Verbindungsbereich 44 ausgestattete Zusatzeinheiten, also entweder ein Verschlusselement 42 oder verschiedene Zusatz-Luftbehandlungsmodule 46, angekoppelt werden können. Ggf. könnte hier zwischen die beiden Modulgehäuse 16, 48 auch ein Adapter eingesetzt werden, sofern dies aus baulichen oder räumlichen Gründen erforderlich oder vorteilhaft ist. Weiter ist es selbstverständlich, dass der Verbindungsbereich 38 am Hauptmodulgehäuse 16 auf mehrere verschiedene Bereiche dieses Gehäuses 16 verteilt sein kann und somit mehrere Verbindungsöffnungen bereitstellen kann. Dies gestattet es, Zusatzmodulgehäuse entsprechend an verschiedenen Positionen mit dem Hauptmodulgehäuse 16 zu koppeln, was, je nach gewünschter Zusatzfunktionalität vorteilhaft sein kann. Auch ist es in diesem Falle möglich, mehrere Zusatz-Luftbehandlungsmodule, die verschiedene Zusatzfunktionalitäten bereitstellen können, mit dem Haupt-Luftbehandlungsmodul zu koppeln.

Abschließend sei darauf hingewiesen, dass selbstverständlich die Aufteilung der verschiedenen Funktionalitäten auf das Haupt-Luftbehandlungsmodul und verschiedene Zusatz-Luftbehandlungsmodule variiert werden kann. So könnte beispielsweise auch die in den Figuren gezeigte Verdampfer/Wärmetauscher-Einrichtung 26 durch ein Zusatz-Luftbehandlungsmodul 46 bereitgestellt werden. Auch könnte daran gedacht werden, in einem derartigen Zusatz-Luftbehandlungsmodul 46 ein zusätzliches Luftfördergebläse vorzusehen, um eine höhere Förderkapazität bereitstellen zu können, wenn dies erforderlich ist.

## Patentansprüche

1. Modular aufgebautes Fahrzeugtemperiersystem, umfassend ein Haupt-Luftbehandlungsmodul (14) zur thermischen oder/und klimatischen Behandlung von in einen Fahrzeuginnenraum (12) einzuleitender Luft mit einem Hauptmodulgehäuse (16), wobei an dem Hauptmodulgehäuse (16) ein Verbindungsbereich (38) mit einer Verbindungsöffnung (40) vorgesehen ist, wobei wahlweise die Verbindungsöffnung (40) in dem Verbindungsbereich (38) des Hauptmodulgehäuses (16) durch ein Verschlusselement (42) abschließbar ist zur Erlangung einer eigenständigen Funktionalität des Haupt-Luftbehandlungsmoduls (14), oder der Verbindungsbereich (38) des Hauptmodulgehäuses (16) mit einem Gegen-Verbindungsbereich (44) an einem Zusatzmodulgehäuse (48) eines Zusatz-Luftbehandlungsmoduls (46) verbindbar ist zur Erlangung einer kombinierbaren Funktionalität des Haupt-Luftbehandlungsmoduls (14) und des Zusatz-Luftbehandlungsmoduls (46), wobei ein Zusatz-Luftbehandlungsmodul (46) eine Heizeinrichtung (56) und eine Strömungsführungseinstelleinrichtung (54) umfasst, durch welche die Durchströmbarkeit des Zusatz-Luftbehandlungsmoduls (46) zur thermischen oder/und klimatischen Behandlung der in den Fahrzeuginnenraum (12) einzuleitenden Luft variierbar ist, wobei in dem Hauptmodulgehäuse ein Wärmetauscher (30) zur Übertragung von in einem Motorkühlmittel transportierter Wärme auf die in einen Fahrzeuginnenraum (12) einzuleitende Luft vorgesehen ist, wobei ein Luftfördergebläse (18) und stromaufwärts davon eine Frischluft/Umluft-Einstelleinrichtung (20) vorgesehen ist, durch welche das Frischluft/Umluft-Verhältnis der in den Fahrzeuginnenraum (12) einzuleitenden Luft variierbar ist, **dadurch gekennzeichnet, dass** das Luftfördergebläse (18) und die Frischluft/Umluft-Einstelleinrichtung (20) in dem Hauptmodulgehäuse (16) vorgesehen sind, dass die Heizeinrichtung (56) brennstoffbetrieben ist, und dass der Wärmetauscher (30) in dem Hauptmodulgehäuse (16) stromabwärts des Verbindungsbereichs (38) angeordnet ist.

2. Modular aufgebautes Fahrzeugtemperiersystem nach Anspruch 1, **dadurch gekennzeichnet, dass** in dem Hauptmodulgehäuse (16) eine Verdampfer/Wärmetauscher-Einheit (26) einer Klimatisiereinrichtung vorgesehen ist.

3. Modular aufgebautes Fahrzeugtemperiersystem nach einem der Ansprüche 1 oder 2, **dadurch gekennzeichnet, dass** das Zusatz-Luftbehandlungsmodul (46) ferner eine elektrisch betriebene Heizeinrichtung (50) umfasst.

4. Modular aufgebautes Fahrzeugtemperiersystem nach einem der Ansprüche 1 bis 3, **dadurch gekennzeichnet, dass** das Zusatz-Luftbehandlungsmodul (46) durch die Strömungsführungseinstelleinrichtung (54) gegen Durchströmung absperrbar ist.

5. Modular aufgebautes Fahrzeugtemperiersystem nach einem der Ansprüche 1 bis 4, **dadurch gekennzeichnet, dass** das mit dem Haupt-Luftbehandlungsmodul (14) zu verbindende Zusatz-Luftbehandlungsmodul (46) aus einer Mehrzahl verschiedener Zusatz-Luftbehandlungsmodule auswählbar ist.

## Claims

1. A modular vehicle tempering system comprising a main air treatment module (14) for thermal or/and climatic treatment of air to be inserted into a vehicle interior (12), with a main module housing (16), the main module housing (16) being provided with a connecting area (38) with a connecting opening (40), wherein the connecting opening (40) in the connecting area (38) of the main module housing (16) may alternatively be sealable by a sealing element (42) for obtaining an independent functionality of the main air treatment module (14), or wherein the connecting area (38) of the main module housing (16) may be combinable with a matching connecting area (44) at an additional module housing (48) of an additional air treatment module (46) for obtaining a combinable functionality of the main air treatment module (14) and the additional air treatment module (46), an additional air treatment module (46) comprising a heating device (56) and a flow regulation control unit (54) for varying the flowability through the additional air treatment module (46) for thermal and/or climatic treatment of air to be inserted into the vehicle interior (12), a heat exchanger (30) for transmitting heat transferred by a motor cooling agent to the air to be inserted into a vehicle interior (12) being provided in the main module housing, an air conveying blower (18) and upstream from the latter a fresh air/recirculated air adjusting device (20) being provided by which the fresh air/recirculated air ratio in the vehicle interior (12) may be varied, **characterised in that** the air conveying blower (18) and the fresh air/recirculated air adjusting device (20) are provided in the main module housing (16), **in that** the heating device (56) is operated with fuel and **in that** the heat exchanger (30) in the main module housing (16) is located downstream from the connecting area (38).

2. A modular vehicle tempering system according to claim 1, **characterized in that** an evaporator/heat exchanger unit (26) of an air treatment system is provided in the main module housing (16).

3. A modular vehicle tempering system according to one of claim 1 and 2, **characterized in that** the additional air treatment module (46) further comprises an electrically operated heating device (50).

4. A modular vehicle tempering system according to one of claims 1 to 3, **characterized in that** the additional air treatment module (46) is sealable against flow-through by means of the flow regulation control unit (54).

5. A modular vehicle tempering system according to one of claims 1 to 4, **characterized in that** the additional air treatment module (46) to be connected with the main air treatment module (14) may be selected from a plurality of different additional air treatment modules.

## Revendications

1. Système modulaire de climatisation de véhicule, comprenant un module principal de traitement d'air (14) pour le traitement thermique et/ou climatique d'air à introduire dans un habitacle de véhicule (12) avec un boîtier de module principal (16), sur le boîtier de module principal (16) étant prévue une zone de liaison (38) avec une ouverture de liaison (40), selon le choix, l'ouverture de liaison (40) pouvant être verrouillée dans la zone de liaison (38) du boîtier de module principal (16) grâce à un élément de verrouillage (42) pour obtenir une fonctionnalité autonome du module principal de traitement d'air (14), ou la zone de liaison (38) du boîtier de module principal (16) pouvant être reliée avec une contre-zone de liaison (44) à un boîtier de module supplémentaire (48) d'un module supplémentaire de traitement d'air (46) pour obtenir une fonctionnalité combinée du module principal de traitement d'air (14) et du module supplémentaire de traitement d'air (46), un module supplémentaire de traitement d'air (46) comprenant un dispositif de chauffage (56) et un dispositif de réglage de guidage des flux (54), grâce auxquels la circulation dans le module supplémentaire de traitement d'air (46) pour le traitement thermique et/ou climatique de l'air à introduire dans l'habitacle du véhicule (12) peut varier, dans le boîtier du module principal étant prévu un échangeur de chaleur (30) pour la transmission de chaleur à transporter dans un moyen réfrigérant motorisé à l'air à introduire dans un habitacle de véhicule (12), un ventilateur d'air (18) et en amont de celui-ci, un dispositif de réglage d'air frais/de circulation d'air (20) étant prévu, grâce auquel le rapport air frais/air de circulation peut varier dans l'air à introduire dans l'habitacle du véhicule (12), **caractérisé en ce que** le ventilateur d'air (18) et le dispositif de réglage d'air frais/de circulation d'air (20) sont prévus dans le boîtier de module principal (16), **en ce que** le dispositif de chauffage (56) est entraîné par du carburant, et **en ce que** l'échangeur de chaleur (30) est disposé dans le boîtier de module principal (16) en aval de la zone de liaison (38).

2. Système modulaire de climatisation de véhicule selon la revendication 1, **caractérisé en ce que** dans le boîtier de module principal (16) est prévue une unité évaporateur/échangeur de chaleur (26) d'un dispositif de climatisation.

3. Système modulaire de climatisation de véhicule selon l'une quelconque des revendications 1 ou 2, **caractérisé en ce que** le module supplémentaire de traitement d'air (46) comprend en outre un dispositif de chauffage entraîné de manière électrique (50).

4. Système modulaire de climatisation de véhicule selon l'une quelconque des revendications 1 à 3, **caractérisé en ce que** le module supplémentaire de traitement d'air (46) peut être fermé à la circulation grâce au dispositif de réglage de guidage des flux (54).

5. Système modulaire de climatisation de véhicule selon l'une quelconque des revendications 1 à 4, **caractérisé en ce que** le module supplémentaire de traitement d'air (46) à relier au module principal de traitement d'air (14) peut être sélectionné à partir d'une pluralité de différents modules supplémentaires de traitement d'air.
